# EUROPEAN PATENT APPLICATION

(11) **EP 1 646 224 A1**
(43) Date of publication of application: **12.04.2006**
(21) Application number: 04023642.4
(22) Date of filing: 05.10.2004
(51) Int. Cl.: H04N 3/04, H04N 3/06, H04N 9/31, H04N 5/74

(54) **Optical projection device**

(71) Applicant: Cottier, Kaspar, 3400 Burgdorf (CH)
(72) Inventor: Cottier, Kaspar, 3400 Burgdorf (CH)

(57) **Abstract**

The low-cost laser projection device has a lens ring composed of a multitude of lenses of short focal length. The optical centers of the lenses are arranged in a near-circular, preferably double-spiral, pattern on a rotating disc, resulting in a two-dimensional scanning of light beams on a screen. The lenses are packed closely to achieve a high number of lines, and the lens ring is mass produced as a single part using precision replication technology.

## Description

### Field of the invention

The present invention relates to optical projection displays, and more particularly to laser projectors, for projecting moving images onto a screen. It provides a compact and low-cost projector module, which spans a wide application range from low-resolution monochromatic panels to high-resolution color displays.

### Background of the invention

In a direct-emission projector such as a laser projector, pulsed light beams are rapidly scanned along a screen for producing an image. Compared to projectors relying on light modulation such as liquid crystal (LC) or digital micromirror (DMM) devices, emission displays are characterized by a high contrast ratio and high power efficiency. However, mostly due to the lack of low-cost lasers at shorter wavelengths (blue and green) for building color displays, laser projectors are currently not commercialized in large quantities.

In a basic configuration (US-3,818,129, Yamamoto, 1974), a two-dimensional scanning of a single beam is performed using a high-speed modulator such as an acousto-optic modulator for the primary scanning direction, and a polygon mirror, such as used in laser printers and bar-code readers, for the secondary scanning direction. For displaying high-resolution images such as HDTV images (1920x1080 pixels at 60 frames per second), this combination becomes impracticable. Therefore alternative scanning methods of single beams have been proposed, such as the use of small-area high-frequency mirrors (US-2002/0047090, Sakurai et al., 2002).

Another method for reducing the frequency constraints on the deflectors that is widely referred to in the prior art is the use of a high number of beams in parallel, each defining an image line, and scanning along this line with a relatively low-speed polygon mirror, using as sources a fiber bundle (US-4,930,849, Tanaka, 1990) or directly an array of laser diodes (US-5,294,940, Wennagel et al., 1994).

An interesting compromise between using an expensive high-frequency light deflection unit and using an excessively high number of light sources is the use of an array of light sources in combination with a polygon scanner wherein each mirror facet has a different tilt angle with respect to the rotor axis, thereby scanning multiple lines on each rotation (US-5,534,950, Hargis et al., 1996). Such polygon scanners are also used in other applications, such as for multi-point speed detection using LIDAR (US-5,864,391, Hosokawa et al., 1999) or as imaging device in Endoscopes (US-6,788,861, Utsui et al., 2004). As for all polygon scanners in a simple configuration, the number of facets, and therefore for the tilted-facet configuration the number of lines that can be scanned, is traded against the angular scan range.

Refractive scanners are well known in the prior art for scanning one dimension, using a lens ring with multiple lenses arranged on a cylindrical surface (GB-4'433'930, Jeffree, 1936, or US-3,700,911, Wildhaber 1972), on a disc (US-4,640,573, Kataoka et al., 1987) or using multifaceted prisms (US-4,209,223, Minoura, 1980).

Systems that provide the possibility of scanning multiple lines, similar to the polygon scanner with facets having different tilt angles cited above, have also been mentioned for the multifaceted prism using facets of different tilt angle (US-3,746,421, Yoder, 1971), for the cylindrical configuration using lenses arranged on a helical path (US-3,809,894, Renzo, 1974), and for the lens-on-disc configuration using lenses arranged on a spiral path (US-4,621,892, Kataoka, 1986). However, these configurations are not intended for projecting collimated beams on a distant screen, offer only a moderate number of lines, and may show vibrations due to the unbalanced rotor element. Furthermore, significant distortions of the scan line due to the circular motion of the lenses are observed especially for planar arrangements.

### Summary of the invention

It is therefore an object of the present invention to provide an optical projection device that avoids the disadvantages of the prior art. It shall be compact and manufacturable at low costs, and it shall span a wide application range from low-resolution monochromatic panels to high-resolution color displays.

The optical projection device for projecting a two-dimensional image on a screen by scanning collimated light beams along a discrete number of lines comprises a lens ring with a plurality of lenses arranged thereon, such that their optical centers occupy different radial positions,
rotating means for continuously rotating the lens ring,
a stationary light source arranged such that it illuminates the lenses and its emitted light is collimated by one lens after the other upon rotation of the lens ring,
monitoring means for continuously monitoring an angular position of the lens ring,
pulsing means for pulsing the light emitted by the light source, and
synchronizing means coupled to the monitoring means and to the pulsing means, for synchronizing the light pulsing with the angular position of the lens ring.

The projection device according to the present invention overcomes the prior-art limitations by simultaneously offering a large angular scan range and a high number of different lines that can be scanned. It is based upon a refractive, low-cost, mass-produced rotor element.

The present invention offers an improvement over above cited prior art with respect to laser projection applications, by significantly increasing the number of lines that can be scanned while keeping a large scanning range, by reducing scan line distortions in a planar configuration, by providing a more balanced rotor for reducing vibrations, by reducing the rotation rate through interlacing of the image, and by optimizing the scanning system for collimated beams.

### Brief description of the drawings

Figure 1 shows a first embodiment of the device according to the invention,
Figure 2 shows a top view of the rotor, where an arrangement of the lens centers on two spiral paths is visible,
Figure 3 shows the detail of a single lens element in two different positions, illustrating the possibilities for dense packing of the lenses,
Figure 4 shows an alternative embodiment using plano-convex lenses for facilitating mass production,
Figure 5 shows an additional embodiment of the device according to the invention for high-resolution projectors and the integration of additional functionality and elements into the scheme.

### Detailed description of the preferred embodiments

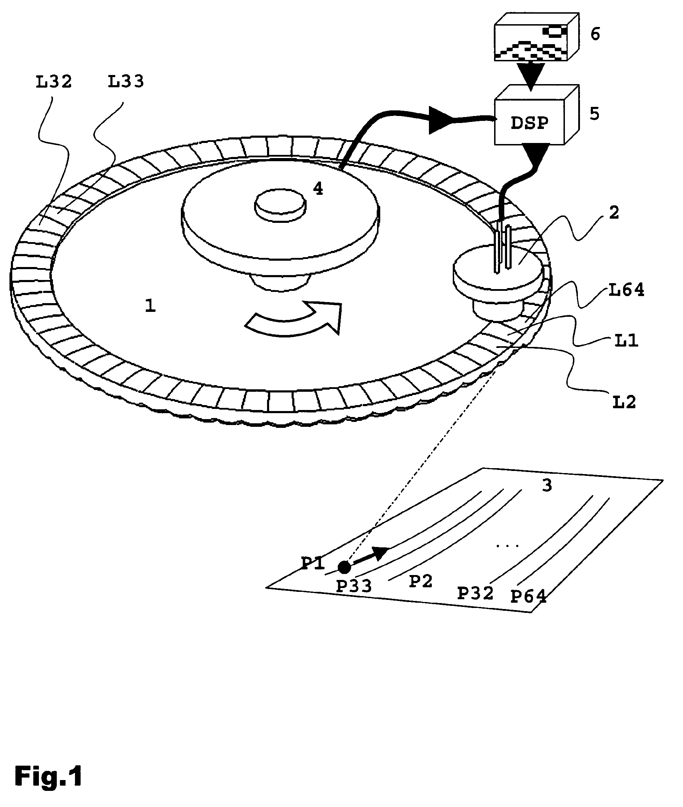

The basic working principle of the projection device according to the invention is described for a first embodiment visible in Figure 1. A laser diode 2 illuminates one Lens L1 of a multitude of lenses L1, L2..L64, which are arranged on a rotor support 1 in a near-circular pattern. The lenses L1..L64 act as collimators for the laser diode 2, and have a positive short focal length between 2 mm and 5 mm. The focal length of each lens is preferably smaller than half of the mean distance between the rotation axis and the lens centers.

After the lenses, the beam impinges upon a distant screen 3, slightly focused or defocused, depending on the desired spot size. Upon rotation of the rotor support 1, while the laser diode 2 remains static, the movement of the lens L1 in front of the laser diode 2 results in a gradual scanning of the beam along a path P1 on the screen 3. The scanning path P1 is tangent to the rotor 1 at the emplacement of the laser diode, defining the primary scanning direction. During this time, the angular position of the rotor is measured continuously using an angular encoder 4, and the laser diode 2 is pulsed and synchronized with the rotation using a digital signal processor (DSP) 5. A given pattern of light spots is hereby created on the path P1, corresponding to the image information received from an image source 6.

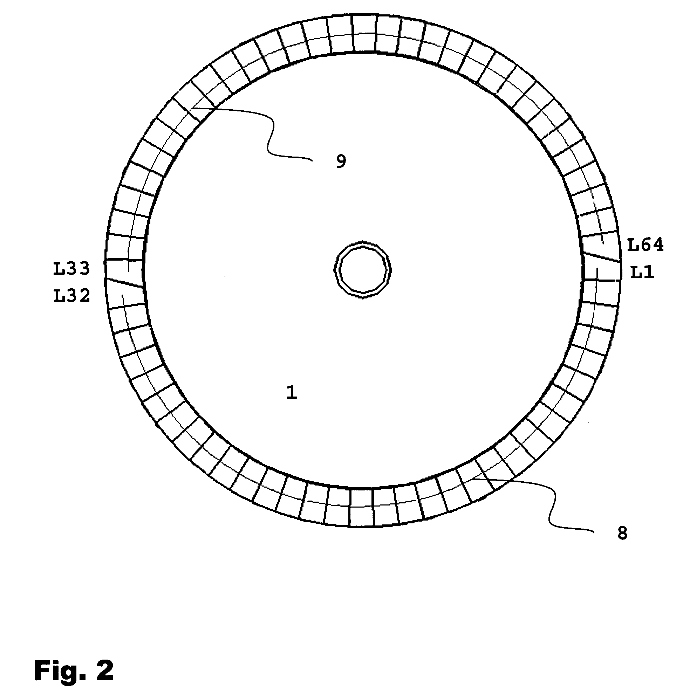

The next lens L2 has a slightly different radial distance to the axis of rotation, therefore a scanning path P2 described by the beam upon collimation through lens L2 is set off with respect to path P1. The procedure is repeated for a complete rotation. Through the arrangement of the optical centers of the lenses in two radially offset spirals 8 and 9 visible in Figure 2, an interlaced image is composed, where lenses L1..L32 scan the first half image, and lenses L33..L64 scan the second half image as is visible in Figure 1. The arrangement in two or more spirals offers a better balancing of the rotor with respect to a solution where the lenses are arranged in only one spiral. A further advantage is that the rotation speed of the rotor 1 can be reduced, as the image is perceived as being more stable, an effect that is well known and exploited for interlaced television signals.

Due to the choice of a short focal length for the lenses Lx, a wide angular range can be scanned in a small angular movement of the rotor. As an example, with lenses of focal length f =3 mm located at approximately 25 mm from the rotation axis, an angular range of 20° can be scanned by a movement of d = 1.1 mm, corresponding to an angular movement of the rotor of approximately 2.5°. Therefore, the lenses can be packed closely, resulting in a large number of lenses and a large number of lines. Furthermore, the deviation of the scan paths Px from a straight line due to the circular motion is significantly reduced as the latter is quasi-linear on the small angular movement.

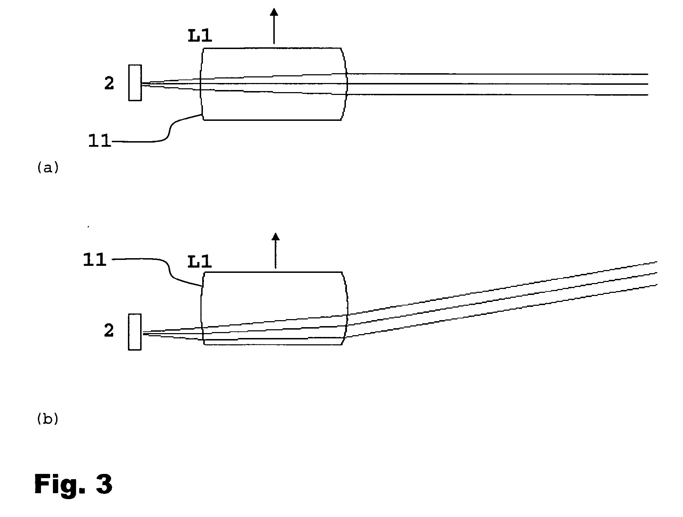

For determining the maximum number of lenses, the laser beam divergence has to be taken into account. The required lens clear aperture in the primary scanning direction is given by 2*rₛ + d, twice the spot radius rₛ on the lens added to the lens scan movement d. An estimation of the required clear aperture for the lenses, and therefore the maximum number of lenses for a given rotor diameter, can be obtained by using a thin-lens approximation. Using this simple model, an initial full beam divergence of θₗₗ translates into a spot radius of rₛ = f*tan(θₗₗ/2) at the lens. In reality, this value can be significantly lower, as is illustrated in Figure 3. There, an example ray trace of the collimation of a low cost laser diode 1 having an initial divergence angle θₗₗ =8° using the central part of a commercially available aspheric lens L1 of focal length f = 3.1 mm is represented. It can be seen from Figure 3(b) showing the lens at the position of maximum deflection of 10°, that due to the refraction at the first convex interface 11, this latter becomes the limiting surface. As the surface is much closer to the source as the focal length, the spot size, and hereby the required clear aperture, is reduced accordingly. Hence, a higher number of lenses can be packed on the rotor circumference than could be estimated using a thin lens approximation. A thorough analysis using Gaussian beam propagation leads to similar results.

In the general case of an elliptical beam output from the light source, as is the case for low-cost laser diodes, it is advantageous to orient the laser in such a way that the smaller divergence is oriented along the primary scanning direction (such as the smaller divergence corresponds to θₗₗ in Figure 3) for achieving a higher number of lenses. The ellipticity of the spot on the screen is then corrected by choosing an adequate pulse duration.

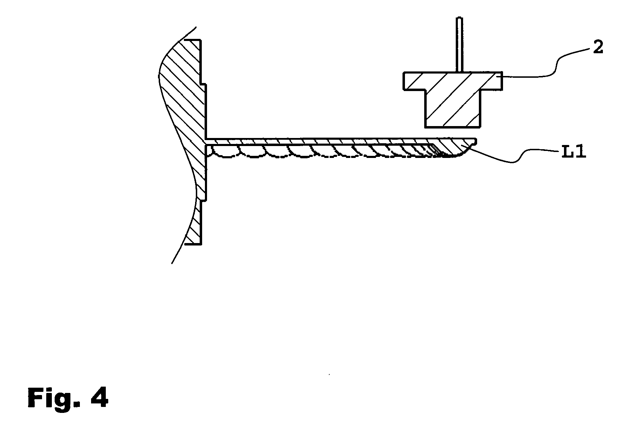

A second embodiment is shown in Figure 4. A plano-convex layout of the lenses can significantly reduce the production costs.

In order to produce color images, several different wavelengths, typically in the range of red, green and blue, have to be integrated into the scheme. It is advantageous to place the different emitters as close as possible to each other, in order to facilitate the superposition of the beams on the screen without the need for adjustment. One possibility for achieving this is to inject the light emitted by lasers of different wavelengths, individually pulsed, into an optical fiber, and to use the polished fiber end as light source illuminating the lens ring. Another possibility is to inject the different wavelengths into different fibers and to place them one next to another.

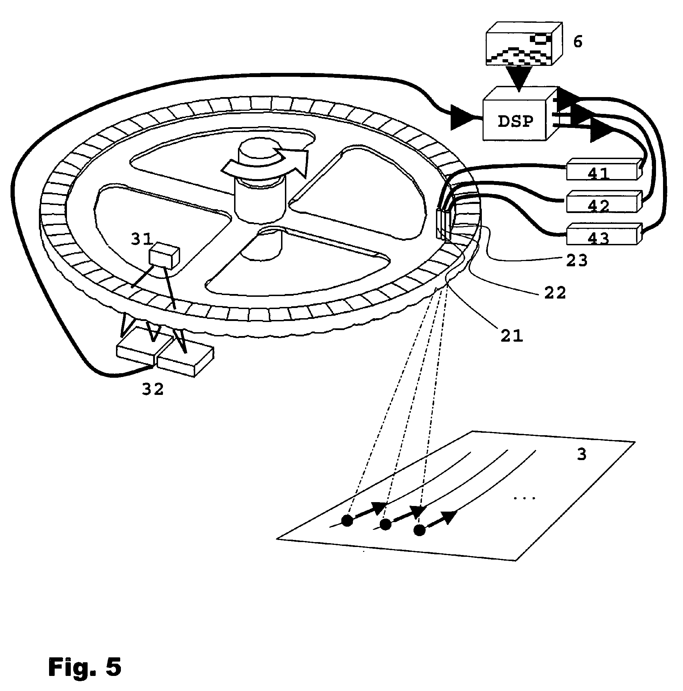

Figure 5 shows a further embodiment adapted for producing images with a higher resolution, i.e., having more lines. The light source 2 is composed of three fiber ends 21, 22, 23, and into these is injected light from several individually amplitude-modulated lasers 41, 42, 43. The sources can be both oriented in radial direction, producing more lines, or along the primary scanning direction, such as more lenses with a smaller primary scan range can be used, and the individual emitters cover different areas on the screen 3. Another possibility for increasing the number of lines is to use multiple lens rings and corresponding individual sources, preferably arranged on the same rotor.

Additional functionality can be integrated into the rotor, as is illustrated in Figure 4. Ventilator winglets 30 can be integrated into the rotor for cooling purposes, and a continuously emitting source 31 imaged onto one or several detectors 32 through the lens ring 1 can be used as an accurate angular encoder.

The lens ring is typically integrated into one part made of a refractory material such as an optical polymer or ceramic. It is mass-produced using replication technologies such as injection-molding, hot embossing or UV-curing. The form of the aspheric convex surfaces are in general specifically optimized for minimal aberrations, as known to the skilled in the art.

The rotor contains bearing supports and supports for directly integrating an electric motor, or alternatively a shaft for coupling to a separate motor. It may be formed from the same refractory material as the lens ring, or it may be assembled to the latter during production.

Additional motorized or adjustable optical elements can be introduced after the rotor as adjustment means for correcting for alignment and refractive index errors, chromatic aberration or temperature effects. Alternatively, the source may be mounted on a support that is movable in axial direction for adjustment purposes.

Table 1 lists the parameters of a preferred embodiment of the device according to the invention, for a monochromatic low-resolution information panel, for use, e.g., as low-cost vehicle head-up display (HUD), as projection display for mobile devices, in advertising, or as a gadget.

**Table 1**

| | |
|---|---|
| Rotor diameter | 50 mm |
| Number of lenses/lines | 128 |
| Lens focal length | 3.5 mm |
| Lens ring configuration | Planar double spiral |
| Lens pitch | 1.23 mm (2.8°) |
| Radial lens width | 3 mm |
| Number of pixels per line | 256 |
| Primary scan range | ±7.5° |
| Secondary scan range | ±5° |
| Screen distance | 50 cm |
| Rotation speed | 2400 rpm (half-image refresh rate of 80 Hz) |
| Source modulation frequency | 20 MHz |
| Light source | Single laser diode |
| Wavelength | 635..650 nm |
| Optical power | 5mW |
| Primary beam divergence θₗₗ | 8° |
| Secondary beam divergence θ_{⊥} | 45° |

## Claims

1. An optical projection device for projecting a two-dimensional image on a screen by scanning collimated light beams along a discrete number of lines, comprising
a lens ring with a plurality of lenses arranged thereon, such that their optical centers occupy different radial positions,
rotating means for continuously rotating the lens ring,
a stationary light source arranged such that it illuminates the lenses and its emitted light is collimated by one lens after the other upon rotation of the lens ring,
monitoring means for continuously monitoring an angular position of the lens ring,
pulsing means for pulsing the light emitted by the light source, and
synchronizing means coupled to the monitoring means and to the pulsing means, for synchronizing the light pulsing with the angular position of the lens ring.

2. The optical projection device according to claim 1, wherein the optical centers of said lenses are arranged on at least two spirals.

3. The optical projection device according to claim 1 or 2, wherein said light source comprises a semiconductor diode.

4. The optical projection device according to any of the preceding claims, comprising a plurality of individually pulsed light sources emitting light with different wavelengths, the light sources being arranged such that the light emitted by all light sources illuminates the lenses.

5. The optical projection device according to claim 4, wherein the light emitted by all light sources is coupled into one single optical fiber that guides the light to the lenses.

6. The optical projection device according to claim 4, wherein the light emitted by each light source is coupled into an optical fiber assigned to the respective light source that guides the light to the lenses.

7. The optical projection device according to any of the preceding claims, wherein the lenses have a positive focal length that is smaller than half of the mean distance between the rotation axis and the lens center.

8. The optical projection device according to any of the preceding claims, wherein the spacing of two adjacent lenses in the direction of rotation is smaller than their focal length.

9. The optical projection device according to any of the preceding claims, wherein two adjacent lenses are in immediate contact with each other.

10. The optical projection device according to any of the preceding claims, wherein said monitoring means comprise a monitoring light source, the lens ring and a detector, the monitoring light source, the lens ring and the detector being arranged in such a way that the detector is placed at the image of the monitoring light source formed by the lenses.

11. The optical projection device according to any of the preceding claims, wherein a rotor support of the lens ring integrates ventilator wings for cooling purposes.

12. The optical projection device according to any of the preceding claims, wherein said rotating means comprise a rotor support with an integrated electric motor.

13. The optical projection device according to any of the preceding claims, wherein a plurality of lens rings are arranged parallel to each other on the same support for increasing image resolution.

14. A method for projecting a two-dimensional image on a screen by scanning collimated light beams along a discrete number of lines, comprising the steps of:
providing a lens ring with a plurality of lenses arranged thereon, such that their optical centers occupy different radial positions,
continuously rotating the lens ring,
illuminating the lenses with light, such that the light is collimated by one lens after the other upon rotation of the lens ring,
continuously monitoring an angular position of the lens ring,
pulsing the light, and
synchronizing the light pulsing with the angular position of the lens ring.

15. The method according to claim 14, wherein the lenses are illuminated with light comprising a plurality of different wavelengths.
